## Europäisches Patentamt

## European Patent Office

## Office européen des brevets

(19)

(11) Veröffentlichungsnummer: **0 097 308**
**B1**

(12) # EUROPÄISCHE PATENTSCHRIFT

(45) Veröffentlichungstag der Patentschrift:
24.09.86

(51) Int. Cl.⁴: **B 65 G 57/28**

(21) Anmeldenummer: **83105806.0**

(22) Anmeldetag: **14.06.83**

(54) Vorrichtung und Verfahren zum automatischen Palettieren von gebündelten Stapeln aus Zeitungen u. dgl.

(30) Priorität: **17.06.82 IT 2190882**

(43) Veröffentlichungstag der Anmeldung:
**04.01.84 Patentblatt 84/1**

(45) Bekanntmachung des Hinweises auf die Patenterteilung:
**24.09.86 Patentblatt 86/39**

(84) Benannte Vertragsstaaten:
**AT FR GB NL SE**

(56) Entgegenhaltungen:
**DE-A-2 638 691**
**DE-A-2 701 028**
**DE-A-2 844 568**
**DE-C-1 126 416**

(73) Patentinhaber: **CIVIEMME S.r.l., Via per Cressa,**
**I-28010 Bogogno (Novara) (IT)**

(72) Erfinder: **Giani, Luciano, Via Sempione 2, I-28047**
**Oleggio (Novara) (IT)**

(74) Vertreter: **de Dominicis, Riccardo, de Dominicis &**
**Partners S.a.s. Via Brera, 6, I-20121 Milano (IT)**

EP 0 097 308 B1

**Beschreibung**

Die vorliegende Erfindung bezieht sich auf einen Palettierer fuer aus Zeitungen u. dgl. bestehende gebundene Stapel sowie auf ein Verfahren zum automatischen Palettieren.

Wie an sich bekannt, muessen die aus den Rotationsdruckmaschinen kommenden Zeitungen fuer deren weitere Hantierung auf Paletten geladen werden. Die Zeitungen werden bekanntlich zuerst in einzelne Stapel bildenden Staplern gestapelt, wobei die Stapel danach gebunden und auf eine nach vorn schwenkbare Aufnahmehalterung nebeneinander bzw. uebereinander angeordnet werden und dann auf die Palette ueberfuehrt, Die Ueberfuehrung von der Aufnahmehalterung auf die Palette erfolgt mit der Zwischenlegung einer bekannten L-foermigen, schwenkbaren Umkippvorrichtung, die einen horizontalen, der Aufnahmehalterung in der Uebergabelage benachbarten und eine Anzahl von Walzen besitzenden Schenkel, sowie einen senkrechten der Aufnahme der jeweiligen Palette dienenden Schenkel aufweist. Die aus Zeitungen bestehenden Stapel werden auf den genannten horizontalen Schenkel geladen und gegen die Palette manuell gefuehrt, wonach die Umkippvorrichtung um 90° gedreht wird und die nun waagerecht stehende Palette von vorn mittels eines Gabelstablers entnommen werden kann.

Diese bekannte Ausfuehrung (DE-AS 2 701 029) weist in der Praxis verschtedene Nachteile und Unzulaenglichkeiten auf, wobei nachfolgend die erheblicheren Nachteile erwaehnt werden.

- Da die schwenkbare U-foermige Umkippvorrichtung Seitenwaende besitzt, ist es zwangslaeufig erforderlich, die beladene Palette lediglich aus einer Seite bzw. aus der Frontseite der Umkippvorrichtung zu entnehmen. Dies bildet deshalb eine gravierende Einsatzeinschraenkung, weil aus Raumgruenden oder bedingt durch die Anordnung der verschiedenen Maschinen in der Druckerei, es oft dagegen wuenschenswert waere, die Palette auch seitlich entnehmen zu koennen.

- Die Hoehe der auf die Palette zu beladenden Stapelgruppe kann hoechstens die Schenkellaenge des mit Walzen versthenen Umkippvorrichtungsschenkels betragen.

- Die Ueberfuerung der Stapel auf die Umkippvorrichtung sowie die Positionierung der leeren Palette auf dieselbe werden von einem Aedienungsmann durchgefuehrt,

- Aufgrund der Lagerung der leeren Palette auf eine schwenkbare Umkippvorrichtung ist die Palette lediglich mit Hilfe von Gabelstapelrn entnehmbar.

Der vorliegenden Erfindung liegt die Aufgabe zugrunde, einen Palettierer der obengenannten Art bzw, ein Verfahren zum automatisierten Palettieren von Stapeln zu schaffen, die faehig sind, die obenerwaehnten Nachteile und Unzulaenglichkeiten des bekannten Standes der Technik zu vermeiden und gleichzeitig ein vollstaendig automatisiertes Palettierverfahren zu ermoeglichen.

Die der vorliegenden Erfindung zugrunde liegende Aufgabe wird erfindungsgemaess mit einem Palettierer geloest, der dadurch gekennzeichnet ist, dass er enthaelt:

a) einen im Palettiergestell von einer schraegen Aufnahmestellung zur Aufnahme der Stapel in eine im wesentlichen horizontale Uebergabestellung schwenkbaren Uebergabehalter, der eine auf demselben hin- und herbewegbare Tragvorrichtung traegt, die ihrerseits ein Trag- und Foerderblech fuer die zu foerdernder aus Stapeln bestehende Stapelgruppe traegt,

b) mit dem genannten Trag- und Foerderblech zusammenarbeitende Schiebe- und Tragmittel, die entlang der horizontalen Foerderstrecke des Trag- und Foerderbleches von der im wesentlichen horizontalen Stellung des schwenkbaren Uebergabehalters bis in der Palettierstellung oberhalb eines Palettierschachtes und zurueck bewegbar sind, und die faehig sind, die untere Kante (Abkantung) des Trag- und Foerderbleches zu tragen,

c) mit dem genannten Trag- und Foerderblech zusammenarbeitende Trag- und Foerdermittel, die entlang der horizontalen Foerderstrecke des Foerderbleches von der im wesentlichen horizontalen Stellung des schwenkbaren Uebergabehalters bis in der Palettierstellung oberhalb eines Palettierschachtes und zurueck entlang der genannten Foerderstrecke auf die Tragvorrichtung auf den Uebergabehalter des Palettierers bewegbar sind, und die faehig sind, die obere Kante (Doppelabkantung) des Trag- und Foerderbleches zu tragen,

d) Sperrmittel, die ueber Steuermittel von einer den Durchgang des mit Stapeln beladenen Trag- und Foerderbleches erlaubenden Stellung nach erfolgtem Durchgang des genannten mit Stapeln beladenen Trag- und Foerderbleches in eine die Stapel anhaltende Stellung steuerbar sind, um somit die Rueckkehr der Stapel waehrend des Rueckhubs des Trag- und Foerderbleches aus dem Palettierschacht zu verhindern und den freien Fall der Stapel auf die sich im Palettierschacht befindende Palette zu ermoeglichen,

e) Ermittlungsmittel zur Ermittlung der erfolgten Senkbewegung der Stapel durch Schwerkraft von dem Trag- und Foerderblech auf die zu beladenden, auf einer in der senkrechten Ebene einstellbar beweglichen Tragvorrichtung angeordneten Palette,

f) Foerdermittel zur Foerderung entweder der Schiebe- und Tragmittel, oder der Trag- und Foerdermittel, oder der Schiebe- und Tragmittel und der Trag- und Foerdermittel zusammen entlang der Foerderstrecke des Trag- und Foerderbleches, sowie Trag- und Fuehrungsmittel zur gleitbaren Fuehrung der genannten Schiebeund Tragmittel und der genannten Trag- und Foerdermittel,

Das Verfahren zum automatischen Palettieren einer aus Stapeln bestehenden Stapelgruppe von der der Stapelbindestation bzw. dem Palettierer zugeordneten Aufnahmehalterung bis auf eine der nachfolgenden Hantierung der Stapel dienenden Palette, ist erfindungsgemaess durch folgende Hantierungsphasen gekennzeichnet:

a) eine Uebergabephase zur Uebergabe der Stapel von der Aufnahmehalterung auf ein Trag- und Foerderblech, das sich auf einer in einem Uebergabehalter hin- und herbewegbaren Tragvorrichtung in einer im wesentlichen schraegen Aufnahmestellung befindet,

b) eine Hebephase der das Foerderblech tragende Tragvorrichtung in den Uebergabehalter,

c) eine Schwenkungsphase des Uebergabehalters von einer im wesentlichen schraegen Aufnahmestellung zur Aufnahme der Stapel in eine im wesentlichen horizontalen Uebergabestellung,

d) eine Foerderphase zur gefoerderung des Trag- und foerderbleches entlang einer Foerderstrecke in die Palettierstellung oberhalb eines Palettierschachtes,

e) eine Sperrphase zur Verhinderung der Rueckkehr der Stapel aus dem Palettierschacht,

f) eine Ruecklaufphase des Trag- und Foerderbleches aus dem Palettierschacht bzw. aus der Palettierstellung entlang der Foerderstrecke bis auf den schwenkbaren Uebergabehalter,

g) eine durch Schwerkraft erfolgende Senkphase der Stapel auf die sich im Palettierschacht befindende Palette bzw. auf die auf der letzteren schon geladenen Stapelschichten mit nachfolgender Senkbewegung der Palette fuer eine Hoehe, die etwas groesser als die Stapelhoehe ist,

h) eine Repositionierungsphase zur Rueckfuehrung des schwenkbaren Uebergabehalters in seiner Uebergabestellung,

i) eine Repositionierung sphase des Trag- und Foerderbleches in die Aufnahmestellung zur Aufnahme der Stapel von der Aufnahmehalterung der Stapelbindemaschine bzw. des Palettierers,

l) eine Entfernungsphase zur Entfernung der beladenen Palette aus dem Palettiererschacht.

Weitere Merkmale des erfindungsgemaessen Palettierers sind dem Kennzeichen der Unteransprueche weiter entnehmbar.

Mit dem erfindungsgemaessen Palettierer bzw. Palettierverfahren wird der Vorteil einer erheblichen "Betriebselastizitaet" deshalb erzeit, weil es bei einer eine einfache Herstellung ermoeglichende und eine sichere Betriebsweise aufweisenden bauweise moeglich, ist sowohl die Hoehe der auf die Palette zu beladenden Stapelgruppe beliebig auszuwaehlen, als auch die Entnahme der beladenen Palette aus mehreren Richtungen durchzufuehren.

Erfindungsgemaess ist es ferner vorteilhaft, den vollen Befoerderungszyklus der Stapelgruppe zu automatisieren, wodurch der Aufwand an Arbeitskraeften drastisch herabgesetzt wird.

Weitere Merkmale, Einzelheiten und Vorteile des erfindungsgemaessen Palettierers bzw. Palettierverfahrens sind in der nachfolgenden Beschreibung unter gezugnahme auf die beiliegenden Zeichnungen naeher beschrieben, die beispielsweise eine vorgezogene Ausfuehrungsform des erfindungsgemaessen Palettierers schematisch darstellen.

Es zeigen:

Fig. 1 bis 7 jeweils eine die verschiedenen Phasen des Foerderzyklus der aus Zeitungen o. dgl. bestehenden Stapelgruppe von der der Stapelbindemaschine zugeordneten Aufnahmehalterung bis auf die Palette darstellende Seitenansicht;

Fig. 8 eine Draufsicht des in Fig. 1 bis 7 dargestellten Palettierers;

Fig. 9 eine perspektivische Ansicht des Uebergabehalters des Palettierers;

Fig. 10 eine Ansicht des Sperrportals zum Anhalten der Stapelgruppe oberhalb des Palettierschachtes;

Fig. 11 eine perspektivische Ansicht des Trag- und Foerderbleche zur Foerderung der auf die Palette zu beladenden Stapel:

12 eine perspektivische Ansicht des Schiebebalkens sowie der Trag- und Foerderstange fuer das Trag- und Foerderblech; und

Fig. 13 die grafische Darstellung der Aufeinanderfolge der Bewegungen der Antriebsmittel zur Betaetigung der beweglichen Bestandteile des erfindungsgemaessen Palettierers.

Unter Bezugnahme auf die teilweise mit verschiedenen Masstaeben gezeichneten Figuren, bei denen gleiche Teile mit gleichen Bezugszeichen versehen sind, ist der erfindungsgemaesse Palettierer insgesamt mit 1 bezeichnet.

Derselbe weist ein Traggestell 2 auf, das im wesentlichen ein Untergestell 3, ein Portal 4 sowie ein im wesentlichen horizontales und sich oberhalb des Untergestelles 3 sowie des Portals 4 ertreckendes Obergestell 5 enthaelt. Mit 6 wird eine schwenkbar gelagerte und der dem nicht dargestellten Stapler nachgeordneten ebenfalls nicht dargestellten Stapel-Bindestation zugeordnete Aufnahmehalterung bezeichnet, wobei sowohl die Aufnahmehalterung 6 als auch die Stapelbindestation und der Stapler an sich bekannt sind bzw. jede beliebige Gestaltung aufweisen koennen. Die Aufnahmehalterung 6 weist eine Vielzahl von die schraege Settenwand derselben bildenden Walzen 7 sowie eine Vielzahl von die Tragebene der auf die mit 10 bezeichnete Palette zu foerndernden Stapel 9 aus Zeitungen o. dgl. bildenden Walzen 8 auf.

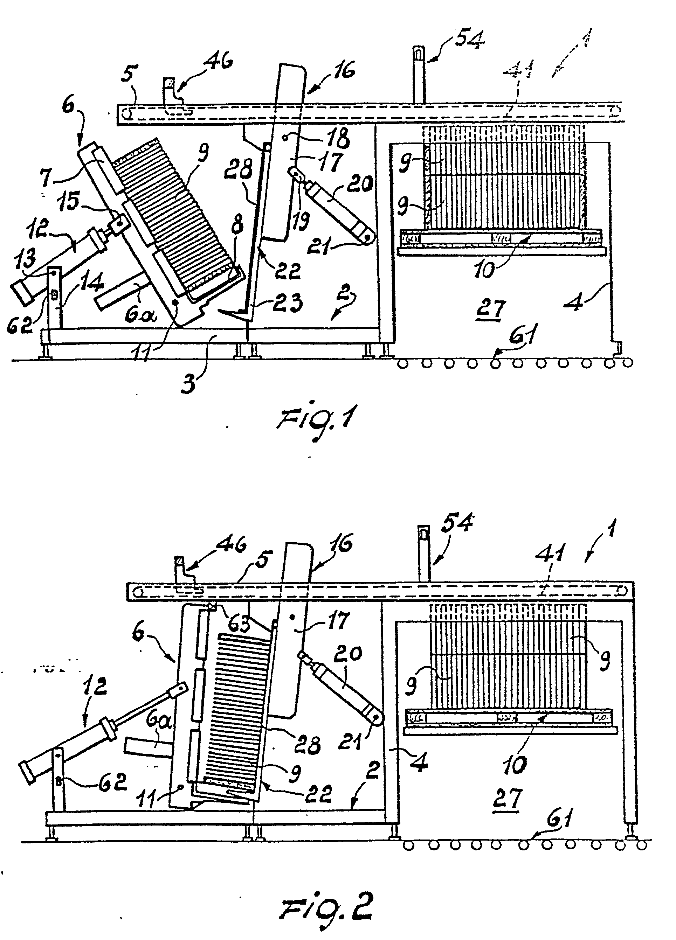

Mit 11 wird die Anlenkachse zur Anlenkung der Aufnahmehalterung 6 am Palettierertraggestell 2 bezeichnet, waehrend mit 12 eine in 13 an einem Halter 14 des Untergestells 3 angelenkte Kolben/-Zylindereinheit bezeichnet wird, wobei die Kolbenstange dieser Kolben/Zylindereinheit 12 in 15 an der erwaehnten Aufnahmehalterung 6 angelenkt ist. Bei Betaetigung der Kolben/Zylindereinheit 12 wird deshalb eine Schwenkbewegung der Aufnahmehalterung 6 bewirkt, um die letztere von der in Fig. 1 dargestellten Aufnahmelage in die Zustellstellung der Stapel 9 auf den im folgenden naeher beschriebenen Uebergabehalter 16 zu schwenken.

Mit 6a wird eine mit der Aufnahmehalterung 6 fest verbundene und an seiner Kolbenstange einen der einwandfreien Verschiebung der Stapel 9 von der Aufnahmehalterung 6 auf den Uebergabehalter 16 dienenden, nicht naeher dargesiellien Schieber tragende Kolben/Zylindereinheit bezeichnet.

Der Uebergabehalter 16 besteht aus einem in 18 am Palettierertraggestell 2 angelenkten Rahmen 17, wobei an dem Uebergabehalter 16 in 19 das freie Ende der Kolbenstange einer Kolben/Zylindereinheit 20 angelenkt ist, deren Zylindergehaeuse seinerseits in 21 an dem Palettierertraggestell 2 angelenkt ist.

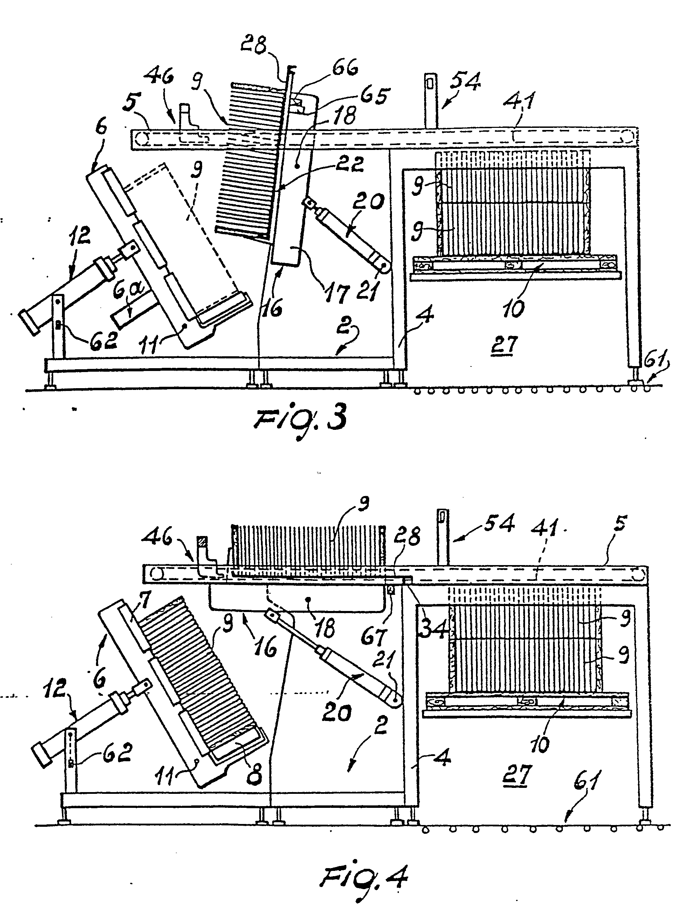

Bei Betaetigung der Kolben/Zylindereinheit 20 ist es deshalb moeglich, den Uebergabehalter 16 von seiner in Fig. 1 dargestellten Aufnahmestellung zur Aufnahme der Stapel 9 in die im wesentlichen horizontale in Fig. 4 dargestellte Uebergabestellung zur Weiterfoerderung der Stapel 9 zu schwenken.

Um die Stapel 9 aufnehmen zu koennen und dann dieselben nach oben zu schwenken, ist der Uebergabehalter 16 mit einem zurueckziehbaren Rechen 22 versehen, der im dargestellten Beispiel aus einer Vielzahl von Staeben 23 besteht, wobei die unteren Abschnitte 24 der Staebe 23 rechtwinklig abgebogen sind und dabei eine Stuetzebene fuer die Stapel bilden. Die Staebe 23 sind untereinander fest verbunden und der Rechen 22 ist, wie nachfolgend naeher beschrieben, auf dem Uebergabehalter 16 verschiebbar gelagert.

Die Hin- und Herbewegung des zurueckziehbaren Rechens 22 erfolgt unter Anwendung einer Kolben/Zylindereinheit 25, deren Zylindergehaeuse mit dem Rahmen 17 fest verbunden und deren Kolbenstange an einer mit dem Rechen 22 fest verbundenen Querstange 26 angeschlossen ist.

Bei Betaetigung der Kolben/Zylindereinheit 25 ist es dehalb moeglich, den Hub des Rechens 22 von der in Fig. 1 und 2 dargestellten Aufnahmestellung zur Aufnahme der Stapel 9 in die in Fig. 3 darfestellte Hebestellung derselben zu steuern, um somit mit Sicherheit die Kollision der Stapel 9 mit der Aufnahmehalterung 6 zu vermeiden und gleichzeitig die Sperrigkeit des Palettierers herabzusetzen.

Um eine einwandfreie Foerderung von Stapelgruppen entlang deren Foerderungsstrecke bzw. von der im wesentlichen horizontalen Stellung des Uebergabehalters 16 bis oberhalb eines mit 27 bezeichneten und vom Innenraum des Portals 4 gebildeten Palettierschachtes zu ermoeglichen, wird erfindungsgemaess die Anwendung eines Trag- und Foerderbleches 28 vorgeschlagen, dessen Gestaltung aus dem in Fig. 9 dargestellten Beispiel ersichtlich ist. Das Trag- und Foerderblech 29 besteht im wesentlichen aus einer Blechplatte, die unten eine rechtwinklige Abkantung 29 und oben eine im Querschnitt U-foermige Doppelabkantung bzw. ein U-foermiges Eisenprofil 30 aufweist. Die zwei Schenkel 31 und 32 sowie der Quersteg des Eisenprofils 30 bilden eine Kammer 33, die dazu bestimmt ist, eine Trag- und Foerderstange 34, wie im folgenden naeher beschrieben, aufzunehmen.

Der Schenkel 32 dient zur Anlage des Trag- und Foerderbleches 28 auf die obere Querseite des Rechens 22 und kann gegebenenfalls weitere der genannten Eingriff verbessernde, nicht dargestellte, Abkantungen bzw,. Ansaetze aufweisen. Die Foerderstange 34 dient als einen den Rueckhub des Trag- und Foerderbleches 28 bewirkenden Schieber, wobei die Foerderstange 34 an Endplatten 35 angeschlossen ist, die jeweils ueber z. B. Muttern 36 mit jeweils einer Seitenplatte 37 fest verbunden sind.

An jeder Seitenplatte 37 sind in 39, 40 die Kettenenden jeweils einer ueber auf jeder Seitenwand 5a des Obergestells 5 gelagerte Umlenkraeder 42, 43 umgelenkten Antriebskette 41 angeschlossen, wobei jede Seitenplatte 37 eine Fuehrungsmuffe 38 aufweist. Dem dargestellten Umlenkrad ist ein Antriebsaggregat, z. B. ein Getriebemotor 42a, zugeordnet. Die Fuehrungsmuffen 38 der Seitenplatten 37 sind auf mittels Zwischenelemente 45 an der jeweiligen Seitenwand 5a des Obergestells geschlossene Fuehrungsstangen 44 gelagert.

Mit 46 wird ein Schiebebalken fuer das Trag- und Foerderblech 28 bezeichnet, wobei der Schiebebalken 46 mit zwei auf jeweils einer Fuehrungsstange 44 des Obergestells 5 verschiebbar gelagerten fuehrungsmuffen 47 versehen ist. Zwischen den Seitenplatten 46a ist eine Vielzahl von einen Absatz 49 aufweisenden Traglamellen 48 gehalten, wobei der Absatz 49 dazu dient, die untere Abkantung 29 des Trag- und foerderbleches 25 waehrend der Annaeherungsbewegung des genannten Schiebebalkens 46, wie im folgenden naeher beschrieben, aufzunehmen.

Aus Fig. 12 ist ersichtlich, dass auf den Seitenplatten 46a des Schiebebalkens 46 jeweils drei Umlenkraeder 50, 51 und 52 fuer die betreffende Antriebskette 41 gelagert sind, wobei dem Umlenkrad 52 einer Seitenplatte 46a ein Antriebsmotor 53 zur Annaeherungs- bzw. Entfernungsbewegung des Schiebebalkens 46, wie weiter naeher beschrieben, zugeordnet ist.

Die Umlenkraeder 50, 51 und 52 sind frei drehbar gelagert. Fuer eine deutlichere Darstellung wurden die Antriebe 42a und 53 auf der Aussenseite der einen Seitenplatten 46a bzw. der einen Antriebskette 41 gezeichnet, wobei diese Bestandteile dagegen aus Sperrigkeitsgruenden auf der Innenseite angebracht sind.

Mit 54 wird ein Sperrportal fuer die Stapel 9 waehrend der Rueckhubbewegung des Trag- und Foerderbleches 28 bezeichnet. An dem Sperrportal 54 sind deshalb Sperrmittel angebracht, die im dargestellten Beispiel aus zwei drehbaren Sperrstaeben 55 bestehen, die in dem Quersteg 56 des Sperrportals 54 gelagert sind und an ihren Laferungsenden ein Zahnradsegment 57 aufweisen, die mit einem mittels einer Kolben/Zylindereinheit 59 hin- und herbeweglichen Zahnstange 59 kaemmen. Bei Betaetigung der Kolben/Zylindereinheit 59 wird die mit gestrichelter Linie dargestellte Sperr- bzw. Anhaltestellung der Sperrstaebe 55 oder, wie mit voller Linie dargestellt, die Durchlaufstellung derselben bewirkt, um somit den Stapeln 9 zu gestatten, oberhalb des Palettierschachtes 27 zu gelangen.

Mit 60 wird eine an dem Obergestell 5 angebrachte und zur Steuerung der Senkbewegung der Palette 10 dienende Fotozelle bezeichnet. Die Trag- und Senkvorrichtung der Palette 10 kann beliebie ausgewaehlt werden und ist deshalb nicht naeher beschrieben. Sie koennte z. B. seitliche, senkrechte Tragketten oder eine ueber pneumatisch bzw. hydraulisch steuerbare Hebebzw. Senkvorrichtungen getragene Plattform aufweisen.

Die Entnahme der mit Stapeln 9 vollgeladenen Palette 10, Fig. 7, kann mit Hilfe eines Gabelstaplers aus einer beliebigen der drei freien Zugangsseiten des Palettierschachtes 27 erfolgen. Darueber hinaus ist die maximale Hoehe der auf der Palette 10 geladenen Gruppe von Stapeln 9 nur von der lichten Hoehe des Portals 4 bestimmt, so dass dieselbe viel hoeher sein kann als die mit den bekannten Staplern erzielbaren Stapelgruppenhoehen.

Zur weiteren Automatisierung des Palettisiervorganges werden ferner erfindungsgemaess im Boden des Palettisierschachtes 27 eine oder mehrere z.B. aus Walzen 61 bestehende Foerderstrecken vorgesehen. Statt in der gleichen Stuetzebene des Palettierers wie in Fig. 1 dargestellt zu liegen, koennen diese Foerderstrecken ebenfalls in einer tieferen Ebene angeordnet werden.

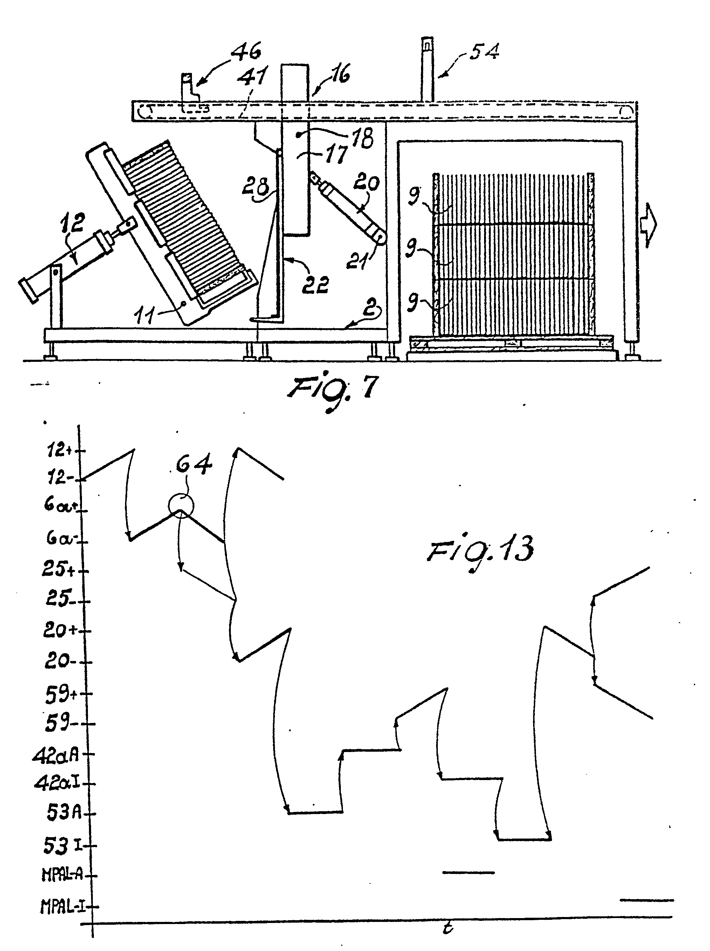

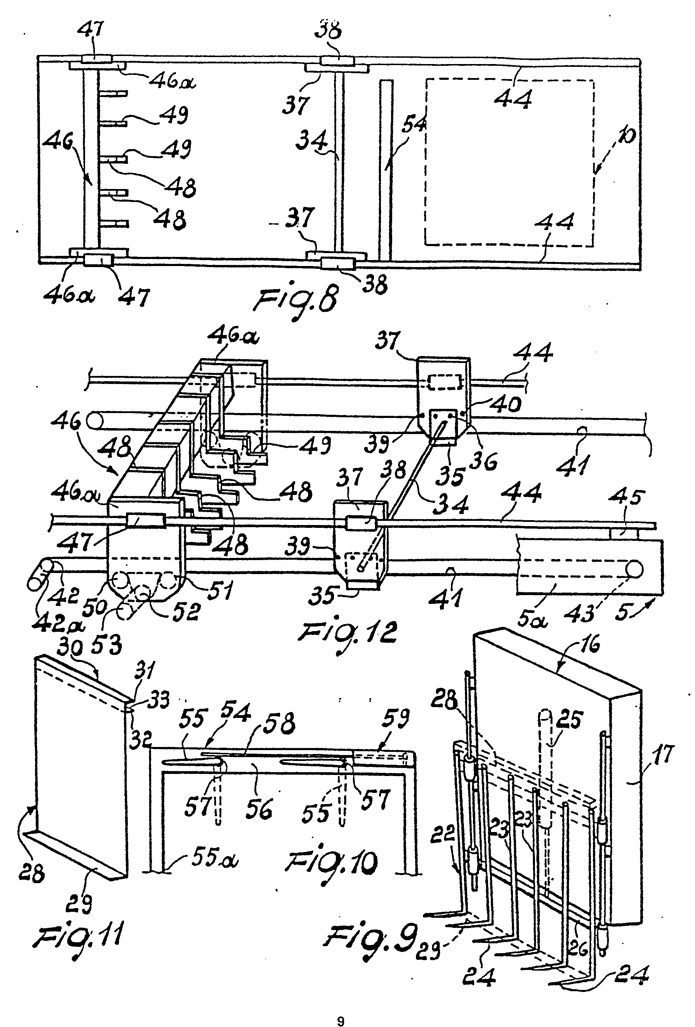

Es wird nun das erfindungsgemaesse Palettierverfahren in seinen verschiedenen Phasen anhand insbesondere der Fig. 13 naeher beschrieben, wobei in Fig. 13 mit der Angabe - + die Ausfahrbewegung der Kolbenstangen von Kolben/Zylindereinheiten und mit der Angabe + - die Einfahrbewegung derselben konventionell dargestellt wird. Ferner bezeichnet A die Vorwaerts- und 1 die Rueckwaertsdrehung der betreffenden Antriebsmotoren. Nach erfolgter Aufnahme der Stapel 9 auf der Aufnahmehalterung 6 wird der Arbeitszyklus durch getaetigung des Schalters 62 begonnen, der die Steuerung - + der Kolben/Zylindereinheit 12 mit nachfolgender Schwenkbewegung der Aufnahmehalterung 6 in die Zustellstellung bewirkt, wobei in dieser Stellung die Aufnahmehalterung 6 den Endschalter 63 betaetigt. Der letztere bewirkt die Steuerung - + der Kolben/Zylindereinheit 6a, deren nicht dargestellter Schieber die einwandfreie Anlage der Stapel 9 gegen das auf dem Rechen 22 angeordnete Trag- und Foerderblech 28 gewaehrleistet. Ein Zeitgeber 64 bewirkt die verzoegerte Steuerung der Einfahrbewegung + - der Kolben/Zylindereinheit 6a, wobei mittels des Zeitgebers 64 selbst bzw. eines nicht dargestellten Endschalters der Einfahrhub + - der Kolben/Zylindereinheit 25 mit nachfolgender Hebebewegung des Rechens 22, Fig. 3, gesteuert wird und wobei der Anschlag 65 des Rechens 22 den Endschalter 66 betaetigt, der einerseits die Ausfahrbewegung - + der Kolben/Zylindereinheit 20 bewirkt, die deshalb die Uebergabehalter 16 in seiner im wesentlichen horizontalen Uebergabestellung, Fig. 4, bringt und andererseits die Einfahrbewegung + - der Kolben/Zylindereinheit 12 mit nachfolgender Rueckschwenkung der Aufnahmehalterung 6 bewirkt, die somit in der Lage ist, neue Stapel 9 schon waehrend der Abwicklung des restlichen Palettiervorganges aufzunehmen. Wenn der Uebergabehalter 16 in seine im wesentlichen horizontale Uebergabestellung gelangt, betaetigt derselbe den Endschalter 66, der die die Annaeherungsbewegung des Schiebebalkens 46 steuernde Vorwaertsdrehung A des Motors 53 veranlasst, wobei die Traglamellen 48 des Schiebebalkens 46 mit ihrem Absatz 49 in Halterungseingriff mit dem abgekanteten Ende 29. des Trag- und Foerderbleches 28 zwischen den Staeben 23 des Rechens 22 selbst kommen. Diese Annaeherungsbewegung des Schiebebalkens 46 erfolgt deshalb bei stehenden Antriebsketten 41, weil sich das vom Motor 53 angetriebene Umlenkrad 52 auf der nun stehenden Antriebskette 41 aehnlich wie ein mit einer Zahnstange kaemmendes Ritzel bewegt.

Es wird ferner hervorgehoben, dass, wenn der Uebergabehalter 16 in seiner im wesentlichen horizontalen Uebergabestellung gelangt, Fig. 4, die Kammer 33 des Trag- und Foerderbleches 28 in Kupplungseingriff mit der Foerderstange 34 kommt, wobei die letztere somit das Trag- und Foerderblech 28 traegt.

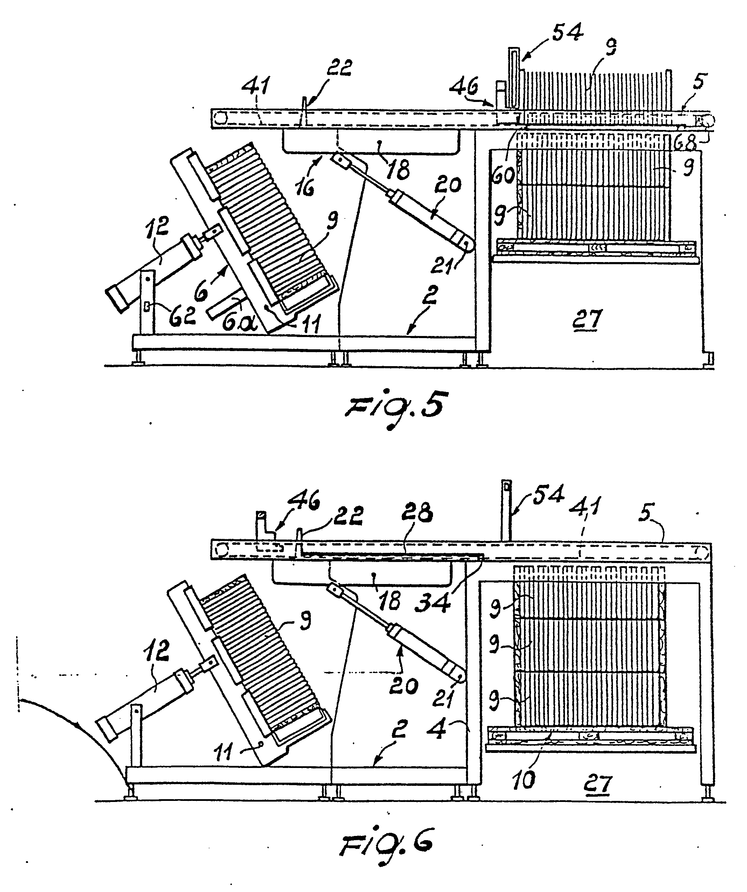

Der Vorwaertshub des Trag- und Foerderbleches 28 wird z. B. durch einen nicht dargestellten und mit dem Schiebebalken 46 zusammenarbeitenden Endschalter gesteuert, der die Vorwaertsdrehung des die Antriebsketten 41 antreibenden Motors 42a bewirkt. Der Vorwaertshub des Trag- und Foerderbleches 28 wird dann durch den Endschalter 28 beendet, Fig. 5, wobei der letztere die Ausfahrbewegung - + der Kolben/Zylindereinheit 59 mit nachfolgender Schwenkung in die senkrechte Stellung der Sperrstaebe 55 bewirkt. Gleichzeitig bzw. nach einigen durch einen nicht dargestellten Zeitgeber bestimmten Sekunden wird die Rueckwaertsdrehung des Motors 42 bewirkt, der die Rueckwaertsbewegung der Antriebsketten 41 bewirkt, welche ihrerseits das Trag- und Foerderblech 28 unterhalb der Stapel 9 herausfaedeln. Die durch die Sperrstaebe 55 oberhalb des palettierschachtes 27 gehaltenen Stapel 9 fallen dann durch Schwerkraft auf die darunterstehende Palette 10 bzw. auf die draufliegende Stapelschicht bzw. Stapelschichten und unterbrechen dabei den Steuerstrahl der Fotozelle 60, die die erforderliche Senkbewegung der nicht dargestellten Tragvorrichtung der palette 10 steuert, Fig. 6. Wenn das Trag- und Foerderblech 28 auf dem sich in der in Fig. 6 dargestellten Stellung befindenen Rechen 22 gelangt, bewirkt ein nicht dargestellter Fuehler das Anhalten des Motors 42a und deshalb des Trag- und Foerderbleches 28 und ebenfalls die Steuerung der Rueckwaertsdrehung des Motors 53, der die Entfernungsbewegung des Schiebebalkens 46 bewirkt. Danach kann die Einfahrbewegung -+ der Kolben/Zylindereinheit 20 mit nachfolgender Schwenkung des Uebergabehalters 16 in seine schraege Aufnahmestellung eingeleitet werden.

Am Anfang dieser Schwenkung erfolgt die automatische Entkupplung des Trag- und Foerderbleches 28 bzw. seiner Kammer 33 von der Foerderstange 34. Nach erfolgter Schwenkung des Uebergabehalters 16 wird einerseits die Ausfahrbewegung -+ der Kolben/Zylindereinheit 25 mit nachfolgender Positionierung des Rechens 22 in die Bereitstellung zur Aufnahme der Stapel 9, Fig. 7, in der die Palette 10 um eine Stapelschicht in bezug auf Fig. 1 gesenkt wurde, sowie andererseits die Einfahrbewegung der Kolben/Zylinderheit 59, wie aus Fig. 13 ersichtlich, bewirkt. In Fig. 13 sind mit MPAL-A und MPAL-I jeweils die Senk- bzw. Hebebewegung des Steuermotors der die Palette 10 tragenden Plattform od. dgl. bzw., im dargestellten Beispiel, die Hebebewegung der mit einer neuen Palette 10 versehenen, genannten Plattform angegeben. Der Arbeitszyklus kann dann durch eine manuelle bzw. zeitgesteuerte Betaetigung erneut von vorn beginnen.

Eine naehere Beschreibung des elektrischen bzw. pneumatischen Steuerkreises der eingesetzten Antriebe, sowie Fuehler, Endschalter od. dgl. wurde deshalb weggelassen, weil dieselben an sich schon bekannt und dem Fachmann ohne weiteres gelaeufig sind bzw. ohne Schwierigkeit aufgrund des gewuenschten Palettiervorganges zusammengeschaltet werden koennen.

Wesentlich fuer die Erfindung ist die Aufeinanderfolge der Hantierungsphasen der Stapel bzw. Stapelgruppen von der Aufnahmehalterung 6 bis auf die Palette 10.

Es wurde ebenfalls eine naehere Beschreibung bzw. Darstellung eines Auswerfers zur Herausschiebung der beladenen Palette 10 aus dem Palettierschacht 27 z. B. ueber eine Walzenstrecke 61, sowie eine Vorrichtung zur automatisierten Einlegung einer leeren Palette 10 auf die nicht dargestellte Tragvorrichtung derselben deshalb weggelassen, weil dieselbe unter schon bekannten Ausfuehrungsformen beliebig ausgewaehlt werden koennen. Die die Palette 10 tragende Trag-Vorrichtung koennte z. B. aus mit Tragelementen versehenen senkrechten, endlosen Antriebsketten oder aus einer durch fluiddynamische Einheiten heb- und senkbaren Plattform usw. bestehen.

Aus der obigen Beschreibung geht deutlich hervor, dass mit dem erfindungsgemaessen automatischen Palettierer die der vorliegenden Erfindung zugrunde gelegte Aufgabe wirksam geloest wird und die im Einleitungsteil angegebenen Vorteile erzielt werden.

In der Praxis koennen alle Einzel- bzw. Bestandteile durch andere technisch und/oder funktionell aequivalente Teile ersetzt werden, ohne dadurch den Schutzumfang vorliegender Erfindung zu verlassen.

Es hat sich als vorteilhaft herausgestellt, den Uebergabehalter 16 in eine nicht genau horizontale sondern in eine um einige Grade nach unten in Foerderrichtung der Stapel 9 geneigte Uebergabestellung zu schwenken, um somit einerseits das Eingreifen des Eisenprofils des Trag- und Foerderbleches 28 auf die Trag- und Foerderstange 34 und andererseits die Positionierung der Abkanung 29 des Trag- und Foerderbleches 28 auf die Tragabsaetze 49 der Traglamellen 48 des Schiebebalkens 46 zu erleichtern.

Es wird ferner herausgehoben, dass die Zustellungsphase der Aufnahmehalterung 6 in die Zustellungsstellung schraeg um einige Grade nach der Senkrechten erfolgt wird, um somit die Zustellung der Stapel 9 zu erleichtern, wobei die abgebogenen Endabschnitte 24 der Staebe 23 kammartig in die zwischen den Tragwalzen 8 der Aufnahmehalterung 6 vorgesehenen Luecken mit Spiel eingreifen.

Was die Halterung des Rechens 22 auf den schwenkbaren rahmenartigen Uebergabehalter 16 anbelangt, ist es selbstverstaendlich, dass dieselbe auf jede beliebige Weise, z. B. unter Anwendung von Fuehrungsstangen, wie fuer den Schiebebalken 46 und die Seitenplatten 37 zur Halterung der Foerderstange 34 dargestellt, ausgefuehrt werden kann.

## Patentansprueche

1. Palettierer fuer aus Zeitungen u. dgl. bestehende gebundene Stapel, enthaltend einen schwenkbaren, die Stapel von einer im Palettiergestell (2) bzw. in der Naehe desselben gelagerten schwenkbaren Aufnahmehalterung (6) erhaltenden Uebergabehalter (16), sowie Antriebsmittel und Kreislaufbestandteile, z. B. Schalter, Endschalter, Zeitgeber, Fotozellen u. dgl., dadurch gekennzeichnet, dass er:
   a) der im Palettiergestell (2) von einer schraegen Aufnahmestellung zur Aufnahme der Stapel (9) in eine im wesentlichen horizontale Uebergabestellung schwenkbaren Uebergabehalter (16), der eine auf demselben (16) hin- und herbewegbare Tragvorrichtung (22) traegt, die ihrerseits ein Trag- und Foerderblech (25) fuer die zu foederndern aus Stapeln (9) bestehende Stapelgruppe traegt,

b) mit dem genannten Trag- und Foerderblech (28) zusammenarbeitende Schiebe-und Tragmittel (46), die entlang der horizontalen Foerderstrecke des Trag- und Foerderbleches (25) von der im wesentlichen horizontalen Stellung des schwenkbaren Uebergabehalters (16) bis in der Palettierstellung oberhalb eines Palettierschachtes (27) und zuruck bewegbar sind, und die faehig sind, die untere Kante (Abkantung 29) des Trag- und Foerderbleches (28) zu tragen,

c) mit dem genannten Trag- und Foerderblech (28) zusammenarbeitende Trag- und Foerdermittel (34), die entlang der horizontalen Foerderstrecke des Foerderbleches (28) von der im wesentlichen horizontalen Stellung des schwenkbaren Ueberg abehalters (16) bis in der Palettierstellung oberhalb eines Palettierschachtes (27) und zuruck entlang der genannten Foerderstrecke auf die Tragvorrichtung (22) auf den Uebergabehalter (16) des Palettierers (1) bewegbar sind, und die faehig sind, die obere Kante (Doppelabkantung 30) des Trag- und Foerderbleches (25) zu tragen,

d) Sperrmittel (55), die ueber Steuermittel (59) von einer den Durchgang des mit Stapeln (9) beladenen Trag- und Foerderbleches (28) erlaubenden Stellung nach erfolgtem Durchgang des genannten mit Stapeln (9) beladenen Trag- und Foerderbleches in eine die Stapel (9) anhaltende Stellung steuerbar sind, um somit die Rueckkehr der Stapel (9) waehrend des Rueckhubs des Trag- und Foerderbleches (25) aus dem Palettierschacht (27) zu verhindern und den freien Fall der Stapel (9) auf die sich im Palettierschacht (27) befindende Palette (10) zu ermoeglichen,

e) Ermittlungsmittel (60) zur Ermittlung der erfolgten Senkbewegung der Stapel (9) durch Schwerkraft von dem Trag- und Foerderblech (28) auf die zu beladenden, auf einer in der senkrechten Ebene einstellbar beweglichen Tragvorrichtung angeordneten Palette (10),

f) Foerdermittel (41, 50, 51, 52) zur Foerderung entweder der Schiebe- und Tragmittel (46), oder der Trag- und Foerdermittel (34), oder der Schiebe- und Tragmittel (46) und der Trag- und Foerdermittel (34) zusammen entlang der Foerderstrecke des Tragund Foerderbleches (35), sowie Trag- und Fuehrungsmittel (44, 38, 47) zur gleitbaren Fuehrung der genannten Schiebe- und Tragmittel (46) und der genannten Trag- und Foerdermittel (34), enthaelt.

2. Palettierer nach Anspruch 1, dadurch gekennzeichnet, dass der Uebergabehalter (16) eine Rahmen (17) aufweist, der die genannte hin- und herbewegbare Tragvorrichtung (22) traegt, sowie eine Kolben/Zylindereinheit (25) enthaelt, deren Kolbenstange (26) mit der genannten Tragvorrichtung (22) zur hin- und hergehenden Bewegung derselben (22) verbunden ist, wobei eine zwischen dem Palettierergestell (2) und dem Uebergabehalter (16) gelagerte Kolben/Zylindereinheit (20) die Schwenkbewegung des Uebergabehalters (16) steuert.

3. Palettierer nach Anspruch 1 und 2, dadurch gekennzeichnet, dass die genannte Tragvorrichtung (22) fuer das Trag- und Foerderblech (28) eine rechenartige aus einer Anzahl von Staeben (23) bestehende Gestaltung aufweist, wobei die Endabschnitte (24) der Staebe (23) derart abgebogen sind, dass dieselben eine Tragebene fuer die Stapel (9) bzw. fuer den abgekanteten Endabschnitt (29) des Trag- und Foerderbleches (25) bilden und wobei der Abstand zwischen den abgebogenen Endabschnitten (24) bzw. die Dicken oder der Durchmesser derselben (24) das Eingreifen dieser Endabschnitte (24) zwischen den Tragwalzen (5) der Aufnahmehalterung (6) mit Spiel ermoeglichen.

4. Palettierer nach Anspruch 1 bis 3, dadurch gekennzeichnet, dass das Trag- und Foerderblech (25) eine flache, plattenartige Form besitzt, die eine untere Kante (Abkantung 29), die faehig ist, von den als Schiebebalken gestalteten Schiebe-und Tragmitteln (46) fuer das Trag- und Foerderblech (28) getragen zu werden, sowie eine eine U-foermige Gestaltung aufweisende obere Kante (Doppelabkantung 30) mit gegenueberstehenden und eine Eingriffskammer (33) bildenden Schenkeln (31, 32) aufweist, wobei die Eingriffskammer (33) faehig ist, die genannten querstangenartigen Trag- und Foerdermittel (34) fuer das Trag- und Foerderblech (28) zu uebergreifen.

5. Palettierer nach einem der vorhergehenden Ansprueche, dadurch gekennzeichnet, dass die Schibe-und Tragmittel (46) fuer das Trag- und Foerderblech (25) aus einem Schiebebalken (46) bestehen, der aus einer Anzahl von untereinander fest verbundenen und jeweils einen mit dem abgekanteten unteren Ende (29) des Trag- und Foerderbleches (25) zusammenarbeitenden Tragabsatz (49) aufweisenden Lamellen (45) besteht, deren Abstand das Eingreifen der genannten Lamellen (45) zwischen den Stangen (23)der Tragvorrichtung (22) mit Spiel ermoeglicht, dass der genannte Schiebebalken (46) an seinen Enden mit Seitenplatten (46a) versehen ist, die im unteren Kettentrum jeweils einer als Foerdermittel (41) wirkenden Antriebskette (41) kaemmende Umlaufraeder (50, 51, 52) tragen, wobei das eine Umlenkrad (52) mittig und unterhalb der beiden anderen Umlenkraeder (50, 51) positioniert ist und wobei bei der einen Seitenplatte (46a) dem mittleren Umlenkrad (52) ein Antriebsmotor (53) zugeordnet ist, und dass die genannten Trag- und Fuehrungsmittel (44, 47) fuer die genannten Seitenplatten (46a) des Schiebebalkens (46) aus jeweils einer Fuehrungsmuffe (47) bestehen, die jeweils auf einer oberhalb der jeweiligen Seitenwand (5a) des Palettiererobergestells (5) aufgebrachten Fuehrungsstange (44) verschiebbar gelagert sind.

6. Palettierer nach einem der vorhergehenden Ansprueche, dadurch gekennzeichnet, dass die genannten Trag- und Foerdermittel (34) des Trag- und Foerderbleches (25) aus einer Foerderstange (34) bestehen, die an ihren Enden mit Seitenplatten (37) versehen ist, dass jede Seitenplatte (37) mit einer ueber zwei auf einer Seitenwand (5a) gelagerten Umlenkraeder (42, 43) umgelenkten Antriebskette (41) fest verbunden und dem einen Umlenkrad (42) ein Getriebemotor (42a) zugeordnet ist, und dass jede Seitenplatte (37) mit einer Fuehrungsmuffe (38) versehen ist, die auf einer an einer Seitenwand (5a) angebrachten Fuehrungsstange (44) verschiebbar gelagert ist.

7. Palettierer nach einem der vorhergehenden Ansprueche, dadurch gekennzeichnet, dass die genannten Sperrmittel (55) fuer die Stapel (9) aus zwei an dem Quersteg (56) eines oberhalb des Palettierertraggestelles (2) vor dem darunterstehenden Palettiererschacht (27) angebrachten Sperr- bzw. Anhaltportals (54) angelenkte Anhaltstaebe (55) bestehen, wobei das Anlenkende der genannten beiden Sperrstaebe (55) als Zahnradsegment (57) gefertigt ist, die (57) mit einer Zahnstange (55) kaemmen, welche mit einer die Anhaltlage der genannten Sperrstaebe (55) bzw. deren im wesentlichen senkrechten Stellung oder die z. B. um 90° gedrehte Ruhelage derselben (55), die den Durchgang des mit Stapel (9) beladenen Trag- und Foerderbleches (25) ermoeglicht, b estimmenden Kolben/Zylindereinheit (59) verbunden ist.

8. Palettierer nach einem der vorhergehenden Ansprueche, dadurch gekennzeichnet, dass der Palettiererschacht (27) in einem das Entnehmen bzw. Auswerfen des mit Stapeln (9) beladenen Palette (10) aus drei Richtungen ermoeglichenden portalartigen Palettierergestell (4) enthalten ist.

9. Palettierer nach einem der vorhergehenden Ansprueche, dadurch gekennzeichnet, dass der Palettiererschachtboden tiefer als die Palettiererstuetzebene vorgesehen ist.

10. Verfahren zum automatischen Palettieren einer aus Stapeln bestehenden Stapelgruppe von der der Stapelbindestation bzw. dem Palettierer zugeordneten Aufnahmehalterung (6) bis auf eine der nachfolgenden Hantierung der Stapel dienenden Palette (10), gekennzeichnet durch folgende Hantierungsphasen:

a) eine Uebergabephase zur Uebergabe der Stapel (9) von der Aufnahmehalterung (6) auf ein Trag- und Foerderblech (28), das sich auf einer in einem Uebergabehalter (16) hin- und herbewegbaren Tragvorrichtung (22) in einer im wesentlichen schraegen Aufnahmestellung befindet,

b) eine Hebephase der das Foerderblech (25) tragende Tragvorrichtung (22) in den Uebergabehalter (16),

c) eine Schwenkungsphase des Uebergabehalters (16) von einer im wesentlichen schraegen Aufnahmestellung zur Aufnahme der Stapel (9) in eine im wesentlichen horizontalen Uebergabestellung,

d) eine Foerderphase zur Befoerderung des Trag- und Foerderbleches (25) entlang einer Foerderstrecke in die Palettierstellung oberhalb eines Palettierschachtes (27),

e) eine Sperrphase zur Verhinderung der Rueckkehr der Stapel (9) aus dem Palettierschacht (27),

f) eine Ruecklaufphase des Trag- und Foerderbleches (25) aus dem Palettierschacht (27) bzw. aus der Palettierstellung entlang der Foerderstrecke bis auf den schwenkbaren Uebergabehalter (16),

g) eine durch Schwerkraft erfolgende Senkphase der Stapel (9) auf die sich im Palettierschacht (27) befindende Palette (10) bzw. auf die auf der letzteren (10) schon geladenen Stapelschichten mit nachfolgender Senkbewegung der Palette (10) fuer eine Hoehe, die etwas groesser als die Stapelhoehe ist,

h) eine Repositionierungsphase zur Rueckfuehrung des schwenkbaren Uebergabehalters (16) in seiner Uebergabestellung,

i) eine Repositionierungsphase des Trag- und Foerderbleches (25) in die Aufnahmestellung zur Aufnahme der Stapel (9) von der Aufnahmehalterung (6) der Stapelbindemaschine bzw. des Palettierers,

l) eine Entfernungsphase zur Entfernung der beladenen Palette (10) aus dem Palettiererschacht (27).

**Claims**

1. A palletiser for package bound newspapers and the like, comprising an oscillating transfer support (16) receiving the stacks from an oscillating receiving support (6), either carried on the palletiser frame (2) or near the same, and actuating means and circuit components such as switches, travel limiters, timers, photocells, and the like, characterised in that it comprises:

a) the transfer support (16) set for oscillation within the palletiser frame (2) from an oblique receiving position, for receiving the stacks (9), to a substantially horizontal transfer position, which supports a reciprocable support device (22) back and forth on same (16), which support device supports in turn a sheet (28) for supporting and translating the set of stacks to be transported and consisting of stacks (9),

b) displacement and support means (46) cooperating with said support and translation sheet (28), which are movable, along the horizontal run of support and translation sheet (28) conveyance, from the substantially horizontal position of the oscillating transfer support (16) to the palletising position above a palletisation well (27) and rearwards, and which are adapted to support the lower side (pinch 29) of the support and translation sheet (28),

c) support and translation means (34) cooperating with said support and translation sheet (28), which are movable along the horizontal run of translation sheet (28) conveyance, from the substantially horizontal position of the transfer support (16) to the palletisation position above a palletisation well (27) and rearwards along the cited run of support device (22) conveyance on the transfer support (16) of the palletiser (1), and which are adapted to support the upper side (double pinch 30) of the support and translation sheet (28),

d) intercepting means (55) which are controllable, through control means (59), from a position where the support and conveyance sheet (28) as loaded with stacks is let through, on completion of the pass of the cited support and conveyance sheet as loaded with stacks (9), to a stack-retaining position, thereby to prevent return of the stacks (9) during the return stroke of the transport and conveyance sheet (28) from the palletisation well (27) and allow the stacks (9) to fall freely onto the pallet (10) located in the palletisation well (27),

e) sensor means (60) for sensing completion of the stack (9) downward movement by gravity from the support and conveyance sheet (28) onto the pallet (10) to be loaded laid on a movable and adjustable support device in the vertical plane,

f) transport means (41, 50, 51, 52) for either translating the the displacement and support means (46) or the support and translation means (34) or the displacement and support means (46) and support and translation means (34) combined along the support and translation sheet (38) translation run, as well as support and guide means (44, 38, 47) for slidingly guiding the cited displacement and support means (46) and the cited support and translation means (34).

2. A palletiser according to Claim 1, characterised in that the transfer support (16) has a frame (17) which supports the cited reciprocable support device (22) and contains a cylinder/piston unit (25) the piston rod (26) whereof is connected to the cited support device (22) for the back and forth movement of same, a cylinder/piston unit (20) supported between the palletiser frame (2) and the transfer support (16) to control the oscillatory movement of the transfer support (16).

3. A palletiser according to Claims 1 and 2, characterised in that the cited support device (22) for the support and translation sheet (28) has a rack-like conformation consisting of plural rods (23), the end sections (24) of the rods (23) being so bent over as to form a support shelf for the stack (9), or for the pinched end section (29) of the support and translation sheet (28), and the distance separating the bent end sections (24) or the thicknesses or the diameters of same (24) allowing these end sections (24) to fit loosely in between the support rollers (8) for the receiving support (6).

4. A palletiser according to Claims 1 to 3, characterised in that the support and translation sheet (28) has a flat tray-like shape which has a lower side (pinch 29) adapted to be supported on displacement and support means (46), configured as a displacement beam, for the support and translation sheet (28), as well as an upper side (double pinch 30) having a U-like configuration with juxtaposed legs (31, 32) forming an engagement chamber, which engagement chamber (33) is adapted to overlie the cited support and translation means (34) in the form of 049027 cross-rods for the support and translation sheet (28).

5. A palletiser according to any preceding claim, characterised in that the displacement and support means (46) for the support and translation sheet (28) consist of a plurality of firmly interconnected reeds (48) having a respective support step (49) cooperating with the pinched lower end (29) of the support and translation sheet (28), the distance setting of which reeds allow the cited reeds (48) to fit loosely in between the support device (22) rods (23), that the cited displacement beam (46) is provided at its ends with flanks (46a) which carry lay sprockets (50, 51, 52) engaging with the lower chain run of a respective drive chain (41) acting as a transport means (41), one lay sprocket (52) being positioned centrally above the other two lay sprockets (50, 51) and in one flank (46a), with the midlle lay sprocket (52) there being associated a drive motor (53), and that the cited support and guide means (44, 47) for the cited flanks (46a) of the displacement beam (46) consist respectively of a guide sleeve (47), which are carried slidingly on a guide rod (44) extending above its respective sidewall (5a) of the palletiser upper frame (5).

6. A palletiser according to any preceding claims, characterised in that the cited support and translation means (34) for the support and translation sheet (28) comprise a translation rod (34) which is provided flanks (37) on the ends thereof, that each flank (37) is firmly connected to a drive chain (41) trained around two lay sprockets (42, 43) carried on a sidewall (5a), and that associated with one lay sprocket (42) is a gear motor (42a), and that each flank (37) is provided with a guide sleeve (38) which is carried slidingly on a guide rod (44) placed on a sidewall (5a).

7. A palletiser according to any preceding claim, characterised in that the cited intercepting means (55) for the stacks (9) comprise two retainer rods (55) articulated to the cross-side (56) of an intercepting and retainer gate (54) located above the the palletiser frame (2) upstream of the underlying palletisation well (27), the fulcrum ends of the cited two intercepting rods (55) being configured as gear segments (57) which mesh with a rack (58) connected to a cylinder/piston unit determining the retained position of said intercepting rods (55), or their substantially vertical position or home position rotated through 90°, for example, which allows the support and translation sheet (28) as loaded with the stacks (9) through.

8. A palletiser according to any preceding claim, characterised in that the palletisation well (27) is enclosed within a gatelike palletiser frame (4) to enable the pallet (10) as loaded with stacks (9) to be picked up or ejected along three directions.

9. A palletiser according to any preceding claim, characterised in that the bottom of the palletiser well if arranged at a lower level than the palletiser supporting shelf.

10. A method of automatically palletising a set of stacks consisting of stacks from the receiving support (6) associated with the stack binding station, or with the palletiser, to a pallet (10) adapted for subsequent handling of the stack, characterised by the following handling steps:

a) a transfer step for transferring the stacks (9) from the receiving support (6) onto a support and transfer sheet (28) which is located, in a substantially oblique receiving attitude, on a support device (22) reciprocable back and forth on a transfer support (16),

b) a support device (22) raising step to raise the support (22) carrying the transfer sheet (28) to the transfer support (16),

c) a step of oscillation of the transfer support (16) from a substantially oblique stack receiving attitude to a substantially horizontal transfer attitude,

d) a translation step for transporting the support and translation sheet (28) along a translation run to the palletisation position above a palletisation well (27),

e) an intercepting step to prevent return of the stacks (9) from the palletisation well (27),

f) a return step of the support and translation sheet (28) from the palletisation well (27), or from the palletisation position, along the translation run to the oscillating transfer support (16),

g) a stack lowering step, to take place by gravity, onto the pallet (10) located in the palletisation well (27), or on the stack layers previously loaded onto said pallet (10) followed by a downward movement of the pallet (10) by a slightly longer distance than the height of the stacks,

h) a re-positioning step for returning the oscillating transfer support (16) to the transfer position thereof,

i) a support and translation sheet (28) repositioning step to the receiving position for receiving stacks (9) from the receiving support (6) of the binding machine or the palletiser,

l) a removal step for taking the loaded pallet (10) away from the palletisation well (27).

**Revendications**

1. Palettiseur pour piles liées se composant de journeux et analogues, contenant un support de transfert (16) pivotant, maintenant les piles par une attache de réception (6) logée pivotante dans le châssis (2) du palettiseur ou respectivement à proximité de celui-ci, ainsi que des moyens d'entraînement et des éléments de circulation par exemple commutateurs, limiteurs, minuteries, cellules photoélectriques et analogues caractérisé en ce qu'il contient:

(a) le support de transfert pivotant dans le châssis (2) du palettiseur d'une position oblique de réception pour la réception de la pile (9) à une position essentiellement horizontale de transfert, qui porte un dispositif porteur (22) qui est mobile sur lui (16) en va-et-vient, lequel de son côté porte une tôle de support et de transport (28) pour les groupes de piles se composant de piles (9) à transporter,

(b) des moyens de poussée et de support (46) coopérant avec ladite tôle de support et de transport (28), qui sont mobiles en aller et retour le long du tronçon horizontal de transport de la tôle (28) de support et de transport de la position essentiellement horizontale du support de transfert pivotant (16) jusqu'à la position de palettisation au-dessus d'une gaine de palettisation (27) et retour, qui sont capables de supporter le bord inférieur (bordure 29) de la tôle de support et de transport (28),

(c) des moyens de support et de transport (34) coopérant avec ladite tôle de support et de transport (28), lesquels sont mobiles le long du tronçon horizontal de transport de la tôle de transport (28), de la position essentiellement horizontale du support de transfert pivotant (16) jusqu'à la position de palettisation au-dessus d'une gaine de palettisation (27) et retour le long dudit tronçon de transport sur le dispositif porteur (22) sur le support de transfert (16) du palettiseur, et qui sont capables de supporter le bord supérieur (double bordure 30) de la tôle de support et de transport (26),

(d) des moyens de verrouillage (55) qui peuvent être commandés, par des moyens de commande (59) d'une position permettant le passage de la tôle de support et de transport (28) chargée de piles (9), à une position retenant les piles (9) après passage réussi de ladite tôle de support et de transport chargée de piles (9), pour ainsi empêcher le retour des piles (9) pendant la course de retour de la tôle de support et de transport (28) de la gaine de palettisation (27) et pour permettre la chute libre des piles (9) sur la palette (10) se trouvant dans la gaine de palettisation (27),

(e) des moyens de détection (60)pour détecter le mouvement de chute des piles (9) qui s'est produit, par la gravité, de la tôle de support et de transport (28) à une palette (10) à charger disposée sur un dispositif porteur mobile de maniére réglable dans le plan perpendiculaire,

(f) des moyens de transport (41, 50, 51, 52) pour le transport des moyens de poussée et de support (46) ou des moyens de support et de transport (34) ou des moyens de support et de poussée (46) et des moyens de support et de transport (34) le long du tronçon de transport de la tôle de support et de transport (38), ainsi que des moyens de support et de guidage (44, 38, 47) pour le guidage coulissant desdits moyens de poussée et de support (46) et desdits moyens de support et de transport (34).

2. Palettiseur selon la revendication 1 caractérisé en ce que le support de transfert (16) présente un cadre (17) qui porte ledit dispositif porteur (22) mobile en va-et-vient, et qui contient une unité à cylindre/piston (25), dont la tige de piston (26) est reliée audit dispositif porteur (22) pour son mouvement en va-et-vient, et une unité à cylindre/piston (20) logée entre le châssis (2) du palettiseur et le support de transfert (16) commande le mouvement de pivotement du support de transfert (16).

3. Palettiseur selon la revendication 1 ou 2 caractérisé en ce que ledit dispositif porteur (22) pour la tôle de support et de transport (28) présente une configuration en rateau se composant d'un certain nombre de branches (23) et les segments extrêmes (24) des branches (23) sont courbés de façon à former un plan de support des piles (9) ou respectivement du segment extrême borde de la tôle de support et de transport (28) et la distance entre les segments extrémes recourbes (24) ou respectivement l'epaisseur ou le diamètre de ceux-ci (24) permet l'enclenchement de ces segments extrêmes (24) entre les cylindres de support (8) de l'attache de réception (6), avec un certain jeu.

4. Palettiseur selon la revendication 1 à 3 caractérisé en ce que la tôle de support et de transport (28) possède une forme plate, en forme de plateau, qui présente un bord inférieur (bordure 29) qui est capable d'être supporté par les moyens de poussée et de support (46) en forme de poutre de poussée pour la tôle de support et de transport (28) ainsi qu'un bord supérieur (bordure double 30) présentant une configuration en forme de U, avec des branches (31, 32) en vis-à-vis et formant une chambre d'engagement (33), la chambre d'engagement (33) étant capable de recouvrir lesdits moyens de support et de transport (34) en forme de tige transversale pour la tôle de support et de transport (28).

5. Palettiseur selon l'une quelconque des revendications précédentes caractérisé en ce que les moyens de poussée et de support (46) de la tole de support et de transport (28) se composent d'une poutre de poussée (46), qui se compose d'un certain nombre de lamelles (48) reliées solidement les unes aux autres et présentant chacune un gradin de support (49) coopérant avec l'extrémité inférieure repliée ou bordée (29) de la tôle de support et de transport (28), dont la distance permet l'engagement desdites lamelles (48) entre les tiges (23) du dispositif porteur (22) avec un certain jeu, en ce que ladite poutre de poussée (46) est pourvue à ses extrémités de plaques latérales (46a), qui portent des roues planétaires (50, 51, 52) s'engrènant dans le brin inférieur d'une chaîne d'entraînement (41) servant de moyen de transport (41), une roue de renvoi (52) étant placée au milieu et en-dessous des deux autres roues de renvoi (50, 51) et dans le cas de l'une des plaques latérales (46a), un moteur d'entraînement (53) est affecté à la roue médiane de renvoi (52) etence que lesdits moyens de support et de guidage (44, 47) desdites plaques latérales (46a) de la poutre de poussée (46) se composent chacun d'un manchon de guidage (47), lesquels sont logés mobiles sur une tige de guidage (44) prévue au-dessus de chaque paroi latérale (5a) du châssis supérieur (5) du palettiseur.

6. Palettiseur selon l'une quelconque des revendications précédentes caractérisé en ce que lesdits moyens de supportet de transport (34) de la tôle de support et de transport (28) se composent d'une tige de transport (34), qui à ses extrémités,est pourvue de plaques latérales (37), en ce que chaque plaque latérale (37) est reliée solidement à une chaîne d'entraînement (41) passant sur deux roues de renvoi (42, 43) disposées sur une paroi latérale (5a) et en ce qu'à une roue de renvoi (42) est affecté un moteur d'entraînement (42a), et en ce que chaque plaque latérale (37) est pourvue d'un manchon de guidage (38) qui est logé mobile sur une tige de guidage (44) prévue sur une paroi latérale (5a).

7. Palettiseur selon l'une quelconque des revendications précédentes caractérisé en ce que lesdits moyens de verrouillage (55) pour les piles (9) se composent de deux branches d'arrêt (55) articulées sur l'âme transversale (56) d'un portique de verrouillage ou respectivement de retenue (54) disposé au-dessus du châssis porteur (2) du palettiseur avant la gaine de palettiseur (27) placée en-dessous, et l'extrémité d'articulation desdites deux tiges de verrouillage (55) est fabriquée en tant que segment de roue dentée, qui s'engrène avec une crémaillère (56) qui est reliée à une unité à cylindre/piston (59) déterminant la position d'arrét desdites tiges de verrouillage (55) ou respectivement leur position essentiellement perpendiculaire ou par exemple leur position de repos tournée de 90° qui permet le passage de la tôle de support et de transport (28) chargée de piles (9).

8. Palettiseur selon l'une quelconque des revendications précédentes caractérisé en ce que la gaine de palettiseur (27) est contenue dans un châssis de palettiseur (4) en forme de portique permettant la réception ou respectivement l'éjection de la palette (10) chargée de piles (9) dans trois directions.

9. Palettiseur selon l'une quelconque des revendications précédentes caractérisé en ce que le fond de la gaine de palettiseur est prévu plus profond que le plan d'appui du palettiseur.

10. Methode pour palettiser automatiquement un groupe de piles se composant de piles, de

l'attache de réception (6) affectée à la station de liaison des piles ou respectivement au palettiseur, jusqu'à une palette (10) servant à la manipulation subséquente des piles, caractérisée par les phases suivantes de manipulation:

a) une phase de transfert pour le transfert des piles (9) de l'attache de réception (6) à une tôle de support et de transport (28) qui se trouve sur un dispositif porteur (22) mobile en va-et-vient dans un support de transfert (16), en une position essentiellement oblique de réception,

b) une phase de levée du dispositif porteur (22) portant la tôle de transport (28) dans le support de transfert (16),

c) une phase de pivotement du support de transfert (16) d'une position de réception essentiellement oblique pour la réception des piles (9) à une position essentiellement horizontale de transfert,

d) une phase de transport pour le transport de la tôle (28) de support et de transport le long d'un tronçon de transport à la position de palettisation au-dessus d'une gaine de palettiseur (27),

e) une phase de verrouillage pour empêcher le retour des piles (9) de la gaine de palettisation (27),

f) une phase de retour de la tôle de support et de transport (28) de la gaine de palettiseur (27) ou respectivement de la position du palettiseur le long du tronçon de transport jusqu'au support de tranfert pivotant (16),

g) une phase d'abaissement se produisant par la force de gravité des piles (9) sur la palette (10) se trouvant dans la gaine de palettiseur (27) ou respectivement sur les couches de piles qui y sont déjà chargées, avec mouvement pivotant subséquent de la palette (10) pour une hauteur qui est un peu plus importante que la hauteur de la pile,

h) une phase de repositionnement pour le retour du support de transfert pivotant (16) à sa position de transfert,

i) une phase de repositionnement de la tôle de support et de transport (28) à la position de réception pour recevoir les piles (9) de l'attache de réception (6) de la machine à lier les piles ou respectivement du palettiseur,

l) une phase d'éloignement pour l'éloignement des palettes chargées (10) au loin de la gaine de palettiseur (27).

Fig.1

Fig.2

Fig. 3

Fig. 4

Fig.5

Fig.6

Fig. 7

Fig. 13

Fig.8

Fig.12

Fig.11

Fig.10

Fig.9